# EUROPÄISCHE PATENTSCHRIFT

(11) **EP 2 909 060 B1**
(45) Veröffentlichungstag und Bekanntmachung des Hinweises auf die Patenterteilung: **30.05.2018**
(21) Anmeldenummer: 13799510.6
(22) Anmeldetag: 27.11.2013
(51) Int. Cl.: B60L 11/18, B60L 1/00, B60L 15/00, H02J 3/01, H02M 1/12, H02M 1/42, H02J 7/00

(54) **LADEVORRICHTUNG FÜR EINEN ENERGIESPEICHER UND VERFAHREN ZUM BETRIEB EINER LADEVORRICHTUNG**
CHARGING DEVICE FOR AN ENERGY STORE AND METHOD FOR OPERATING A CHARGING DEVICE
DISPOSITIF DE CHARGE POUR UN ACCUMULATEUR D'ÉNERGIE ET PROCÉDÉ PERMETTANT DE FAIRE FONCTIONNER UN DISPOSITIF DE CHARGE

(30) Priorität: 06.12.2012 DE 102012222427
(43) Veröffentlichungstag der Anmeldung: 26.08.2015
(73) Patentinhaber: Siemens Aktiengesellschaft, 80333 München (DE)
(72) Erfinder: FINKENZELLER, Michael, 80687 München (DE)
(86) Internationale Anmeldenummer: PCT/EP2013/074823
(87) Internationale Veröffentlichungsnummer: WO 2014/086629

(56) Entgegenhaltungen:
- WO-A1-2006/137590
- DE-A1-102010 002 318
- JP-A- 2008 172 857
- CICHOWLAS M ET AL: "Direct power control for three-phase PWM rectifier with active filtering function", APEC 2003. 18TH. ANNUAL IEEE APPLIED POWER ELECTRONICS CONFERENCE AND EXPOSITION. MIAMI BEACH, FL, FEB. 9 - 13, 2003; [ANNUAL APPLIED POWER ELECTRONICS CONFERENCE], NEW YORK, NY : IEEE, US, Bd. 2, 9. Februar 2003 (2003-02-09), Seiten 913-918, XP010631621, DOI: 10.1109/APEC.2003.1179325 ISBN: 978-0-7803-7768-4

## Beschreibung

Die vorliegende Erfindung betrifft eine Ladevorrichtung für einen Energiespeicher über ein Energienetz, sowie ein Verfahren zum Betrieb einer solchen Ladevorrichtung.

### Stand der Technik

Moderne, vollständig oder zumindest teilweise elektrisch betriebene Kraftfahrzeuge verfügen über eine wiederaufladbare Batterie, sowie über einen oder mehrere elektrische Antriebe. Dabei wird durch die Batterie elektrische Energie bereitgestellt. Diese elektrische Energie wird einem Umrichter zugeführt, der die Batteriespannung in eine ein- oder mehrphasige Spannung für den oder die verbundenen elektrischen Antriebe umwandelt.

Zur Wiederaufladung der Batterie muss das Fahrzeug an ein externes Versorgungsnetz, beispielsweise das lokale Stromnetz, angeschlossen werden. Der Anschluss des Elektrofahrzeuges an das Versorgungsnetz soll dabei mittels eines möglichst einfachen und flexiblen Anschlusses erfolgen. Darüber hinaus sollte das Aufladen der Batterie mit einer möglichst hohen Leistung erfolgen, um die Ladezeit so gering wie möglich zu halten.

Die Druckschrift DE 10 2008 063 465 A1 beschreibt ein elektrisch betriebenes Fahrzeug, bei dem eine Umrichterschaltung für die Ansteuerung der elektrischen Antriebe auch gleichzeitig als Ansteuerschaltung für das Wiederaufladen der Fahrzeugbatterie verwendet wird. Hierzu wird zum Wiederaufladen der Batterie der elektrische Antrieb von der Umrichterschaltung getrennt und die Umrichterschaltung mit dem Versorgungsnetz verbunden.

Die japanische Patentanmeldung JP 2008-172857 A offenbart eine Ladevorrichtung für eine Batterie in einem schienengebundenen Fahrzeug.

Die Druckschrift "Direct power control for three-phase PWM rectifier with active filtering function", APEC 2003, 18TH ANNUAL IEEE APPLIED POWER ELECTRONICS CONFERENCE AND EXPOSITION, MIAMI BEACH, FL, FEB. 9 - 13, 2003; Seiten 913-918, DOI: 10.1109/APEC.2003.1179325, ISBN: 978-0-7803-7768-4 offenbart einen dreiphasigen PWM-Gleichrichter mit einer aktiven Filterfunktion. Als Steuervariablen für den Gleichrichter und für die aktive Filterung werden Wirkleistung und Blindleistung verwendet.

Bei dem Wiederaufladen einer Batterie eines elektrisch betriebenen Fahrzeuges wird die Umrichterschaltung, die die elektrische Energie aus dem Versorgungsnetz der Batterie zuführt mit einer hochfrequenten Taktrate im Bereich von mehreren Kilohertz, üblicherweise im Bereich zwischen 10 und 30 kHz betrieben. Hierbei entstehen Störsignale, die sich in das angeschlossene Versorgungsnetz übertragen können. Um eine Beeinträchtigung des angeschlossenen Versorgungsnetzes zu verhindern, dürfen dabei die Rückwirkungen der Ladeschaltung auf das Versorgungsnetz vorgegebene Grenzwerte nicht überschreiten. Hierzu muss die Ladeschaltung mit einer geeigneten Entstörvorrichtung ausgestattet werden. Aufgrund der hohen Ströme, die beim Wiederaufladen der Kraftfahrzeugbatterie fließen, gestaltet sich die erforderliche Entstörung sehr aufwändig.

Es besteht daher ein Bedarf, nach einer verbesserten Kompensation der Störsignale, die beim Aufladen einer Batterie eines Kraftfahrzeuges entstehen.

### Offenbarung der Erfindung

Dies wird durch eine Ladevorrichtung und ein Verfahren zum Betrieb einer Ladevorrichtung mit den Merkmalen der unabhängigen Patentansprüche erreicht.

Gemäß einer der vorliegenden Erfindung zugrunde liegenden Idee wird somit eine Batterie über einen ersten Umformer geladen, während mittels eines weiteren, zweiten Umformers auftretende Störimpulse aktiv kompensiert werden. Somit können die während des Ladevorgangs auftretenden Störsignale wirkungsvoll reduziert werden und die Beeinträchtigung des angeschlossenen Versorgungsnetzes kann auf effiziente Weise minimiert werden.

Ein erheblicher Vorteil besteht dabei darin, dass die für die Steuerung des Ladevorgangs und die aktive Kompensation der Störsignale dieselben Energiewandler verwendet werden, die während des Fahrbetriebs des Kraftfahrzeugs die elektrischen Antriebe ansteuern. Somit sind für die erfindungsgemäße Erweiterung der Ladevorrichtung nur geringfügige Modifikationen in den entsprechenden Energiewandlern erforderlich. Die erfindungsgemäße Ladevorrichtung kann daher besonders effizient und kostengünstig realisiert werden.

Ein weiterer Vorteil besteht darin, dass die für das Aufladen der Batterie erforderliche Energie ausschließlich über einen ersten Energiewandler gesteuert werden muss, während die aktive Kompensation der Störsignale über einen separaten Energiewandler erfolgt. Daher muss nur der Energiewandler, der das Aufladen der Batterie steuert, für die entsprechend hohen Ströme dimensioniert werden, während für die aktive Kompensation der Störsignale nur sehr geringe Ströme zu steuern sind.

Da die Ansteuerung des Aufladens der Batterie einschließlich der Kompensation der dabei auftretenden Störsignale durch die bereits im Kraftfahrzeug vorhandene Schaltungstechnik realisiert wird, kann daher vorteilhafter Weise die Ladeanordnung besonders einfach mit einem konventionellen Versorgungsnetz verbunden werden, ohne dass dabei weitere komplexe Schaltungsanordnungen zur Filterung der Störsignale erforderlich sind.

Gemäß einer weiteren Ausführungsform umfasst die Ladevorrichtung ferner eine Messvorrichtung, die dazu ausgelegt ist, eine Spannung in dem Energienetz während des Ladens zu überwachen, wobei der zweite Energiewandler die Beeinträchtigung in dem Energienetz basierend auf der überwachten Spannung kompensiert. Durch das Überwachen der Netzspannung während des Ladevorgangs, vorzugsweise in Echtzeit kann die Ladevorrichtung zuverlässig auftretende Störsignale unmittelbar erkennen und daraufhin mittels des zweiten Energiewandlers diese Störsignale aktiv gegensteuern.

Gemäß einer weiteren Ausführungsform umfasst die Ladevorrichtung ferner einer Schätzvorrichtung, die dazu ausgelegt ist, eine Beeinträchtigung des Energienetzes während des Ladens zu berechnen, wobei der zweite Energiewandler die Beeinträchtigung mit dem Energienetz basierend auf der berechneten Beeinträchtigung kompensiert. Durch das Abschätzen von potentiell auftretenden Störsignalen kann eine besonders einfache Ermittlung der auftretenden Störsignale erfolgen.

Gemäß einer bevorzugten Ausführungsform wird der erste Energiewandler während des Ladens des Energiespeichers mit einer vorbestimmten Steuerfrequenz betrieben, und die Schätzvorrichtung berechnet die Beeinträchtigung basierend auf der vorbestimmten Steuerfrequenz. Da die auftretenden Störsignale während des Ladens in großem Maße von den verwendeten Steuerfrequenzen der Ladesteuerung abhängen, eignet sich die Steuerfrequenz sehr gut zur theoretischen Berechnung der Störsignale.

Gemäß einer weiteren Ausführungsform umfasst die zweite Netzanschlussvorrichtung eine Filtereinheit. Hierdurch ist es beispielsweise möglich, Gleichspannungsanteile zwischen dem Versorgungsnetz und der Ladevorrichtung zu entkoppeln. Vorzugsweise umfasst die Filtereinheit ein Hochpassfilter, besonders bevorzugt eine kapazitive Kopplung zwischen Energiewandler und Energienetz.

Gemäß einem weiteren Aspekt ist der erste Verbraucher ein erster elektrischer Antrieb und der zweite Verbraucher ein zweiter elektrischer Antrieb.
Eine Ausführungsform der vorliegenden Erfindung umfasst ein Elektrofahrzeug mit einer erfindungsgemäßen Ladevorrichtung. Insbesondere bei Elektrofahrzeugen ist ein sehr flexibler Anschluss an ein Versorgungsnetz wünschenswert, wie er durch die vorliegende Erfindung bereitgestellt werden kann.
Gemäß einer weitere Ausführungsform des erfindungsgemäßen Verfahrens kann der Schritt zum Ermitteln der auftretenden Beeinträchtigung eine Spannung in dem Energienetz überwachen, und die Beeinträchtigung basierend auf der überwachten Spannung ermitteln.
Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Figur 1:: eine schematische Darstellung einer Ladevorrichtung gemäß einer Ausführungsform der vorliegenden Erfindung;
- Figur 2:: eine schematische Darstellung einer ersten und Netzanschlussvorrichtung gemäß einer Ausführungsform der vorliegenden Erfindung;
- Figur 3:: eine schematische Darstellung einer zweiten Netzanschlussvorrichtung gemäß einer Ausführungsform der vorliegenden Erfindung; und
- Figur 4:: eine schematische Darstellung eines Verfahrens zum Betrieb einer Ladevorrichtung gemäß einer Ausführungsform der vorliegenden Erfindung.

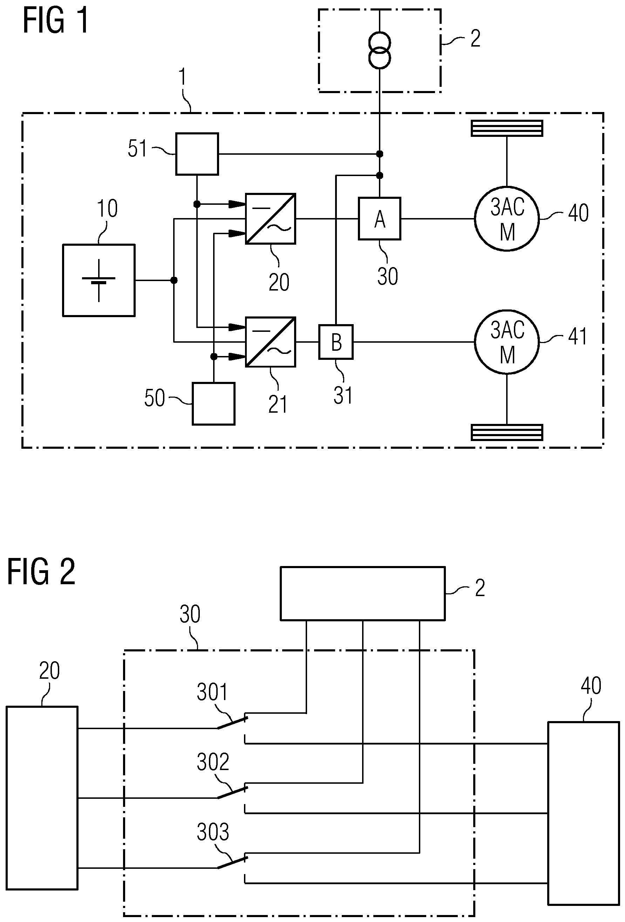

Figur 1 zeigt eine schematische Darstellung eines Elektrofahrzeugs 1 mit einer erfindungsgemäßen Ladevorrichtung. Das Fahrzeug umfasst dabei eine Batterie 10 zur Speicherung elektrischer Energie. Als Batterie 10 ist dabei jede Art eines wiederaufladbaren elektrischen Energiespeichers denkbar. Beispielsweise kann es sich bei der Batterie 10 um eine Batterie auf Basis von Lithium-Ionen-Zellen, Lithium-Polymer-Zellen, Mittel-Metallhydrid-Zellen, Akkumulatoren auf Basis von Blei, Zink, Natrium, Lithium, Magnesium, Schwefel oder anderen Metallen, Elementen oder Legierungen handeln. Weitere Energiespeicher, die in der Lage sind, elektrische Energie abzugeben und darüber hinaus auch wieder aufgeladen zu werden, sind ebenso möglich.

Die Batterie 10 ist mit mindestens zwei Energiewandlern 20, 21 verbunden. Jeder dieser Energiewandler 20, 21 formt aus der von der Batterie 10 bereitgestellten Gleichspannung eine ein- oder mehrphasige Spannung, mit der die jeweils angeschlossenen elektrischen Antriebe 40, 41 angesteuert werden. Bei den Energiewandlern 20, 21 kann es sich beispielsweise um Wechselrichter (Inverter) handeln, die aus der Batteriegleichspannung eine ein- oder dreiphasige Wechselspannung erzeugen.

Die von den Energiewandlern 20, 21 erzeugten Spannungen werden den elektrischen Antrieben 40, 41 zugeführt. Beispielsweise kann dabei jedes Rad des Kraftfahrzeugs von einem separaten Antrieb 40, 41 angetrieben werden. Darüber hinaus ist es auch denkbar, die Räder der Vorderachse mit einem ersten Antrieb anzutreiben und die Räder der Hinterachse mit einem zweiten Antrieb anzutreiben. Andere Antriebskonzepte mit mindestens zwei separat angesteuerten Antrieben sind ebenso möglich.

Zum Wiederaufladen der Batterie 10 sind an den Wechselspannungsseiten der Energiewandler 20, 21 jeweils Netzanschlussvorrichtungen 30, 31 angeordnet. Über diese beiden Netzanschlussvorrichtungen 30, 31 kann das Fahrzeug mit einem ein- oder dreiphasigen Versorgungsnetz 2 verbunden werden.

Figur 2 zeigt eine schematische Darstellung der ersten Netzanschlussvorrichtungen 30. Die erste Netzanschlussvorrichtung 30 dient dabei dem Anschluss des Versorgungsnetzes für das Wiederaufladen der Batterie 10. Die erste Netzanschlussvorrichtung 30 verfügt dabei für jede zu verbindende Phase mindestens über einen Umschalter 301, 302, 303. Durch diese Umschalter 301, 302, 303 kann entweder der Antrieb 40, oder alternativ das Versorgungsnetz 2 mit dem ersten Energiewandler 20 verbunden werden. Somit kann sichergestellt werden, dass während des Ladevorgangs der entsprechende Antrieb 40 nicht mit elektrischer Energie aus dem Versorgungsnetz 2 versorgt wird.

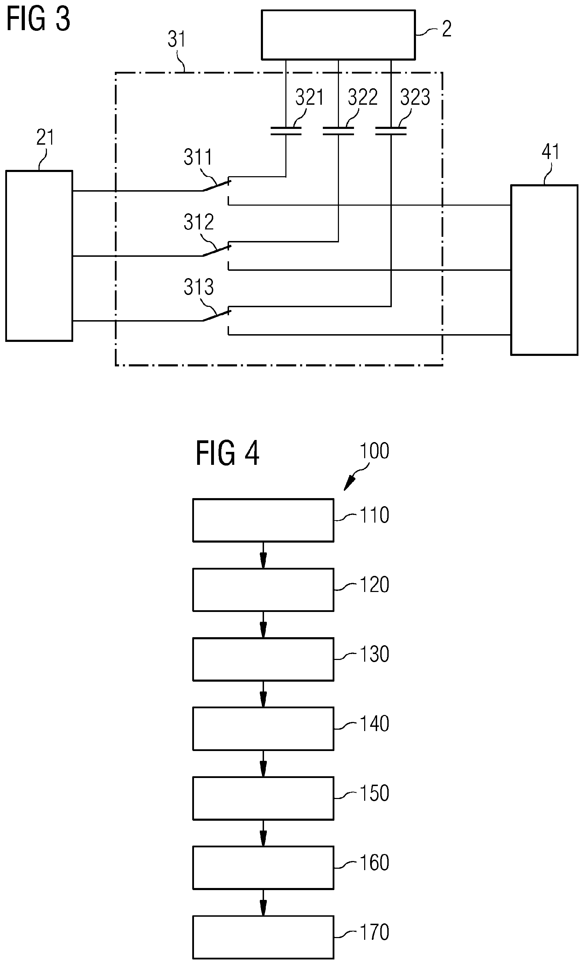

Figur 3 zeigt eine schematische Darstellung der ersten Netzanschlussvorrichtungen 31. Die zweite Netzanschlussvorrichtung 31 ist im Leitungsverlauf zwischen dem zweiten Energiewandler 21 und dem zweiten elektrischen Antrieb 41 angeordnet. Die zweite Netzanschlussvorrichtung 31 ist darüber hinaus ebenfalls mit dem Versorgungsnetz 2 verbunden. Zur galvanischen Trennung des zweiten Antriebs 41 vom Energieversorgungsnetz während des Ladevorgangs umfasst die zweite Netzanschlussvorrichtung 31 die Schaltelemente 311, 312, 313.

Im Folgenden wird das Aufladen der Batterie 10 durch das Versorgungsnetz 2 beschrieben. Hierzu befinden sich die Schaltelemente 301 bis 313 der beiden Netzanschlussvorrichtungen 30, 31 in einer Schalterstellung, die die beiden Energiewandler 20, 21 mit dem Versorgungsnetz 2 verbinden. Die elektrischen Antriebe 40, 41 sind dabei durch die Netzanschlussvorrichtungen 30, 31 von den Energiewandlern 20, 21 und dem Versorgungsnetz 2 getrennt. Somit liegt die elektrische Energie des Versorgungsnetzes 2 an dem ersten Energiewandler 20. Der Energiewandler 20 wird dabei als Laderegler für die Batterie 10 betrieben. Der Energiewandler 20 richtet dabei die Wechselspannung aus dem Versorgungsnetz 2 gleich und erzeugt eine Ladespannung für die Batterie 10. Je nach Bedarf kann die durch den Energiewandler 20 bereitgestellte Gleichspannung dabei durch einen geeigneten Hoch- oder Tiefsetzsteller innerhalb des Energiewandlers 20 an die Batteriespannung angepasst werden. Der Energiewandler 20 wird mit einer hochfrequenten Steuerfrequenz getaktet. Diese Steuerfrequenz beträgt üblicherweise mehrere Kilohertz. Vorzugsweise liegt die Steuerfrequenz im Bereich zwischen 10 und 30 kHz.

Der getaktete Betrieb des Energiewandlers 20 während des Ladevorgangs der Batterie 10 führt zu hochfrequenten Störsignalen. Ohne weitere Gegenmaßnahmen würden sich diese Störsignale in Richtung des Versorgungsnetzes 2 ausbreiten. Dies würde zu einer erheblichen Beeinträchtigung des Versorgungsnetzes 2 und der weiteren in diesem Versorgungsnetz 2 angeschlossenen Verbraucher führen.

Zur Kompensation der während des Ladevorgangs durch den ersten Energiewandler 20 erzeugten Störsignale, werden durch den zweiten Energiewandler 21 aktiv Spannungssignale generiert, die diese Störsignale kompensieren. Die so erzeugten Kompensationssignale werden durch die zweite Netzanschlussvorrichtung 31 dem Versorgungsnetz 2 zugeführt. Dabei sind auch die Schaltelemente 311, 312 und 313 so gestaltet, dass der Antrieb 41 von dem Versorgungsnetz 2 und dem zweiten Energiewandler 21 getrennt ist.

Somit werden die durch den ersten Energiewandler 20 erzeugten Störsignale, als auch die durch den zweiten Energiewandler 21 erzeugten Kompensationssignale einander überlagert und löschen sich gegenseitig aus. Bei einer optimal eingestellten aktiven Kompensation durch den zweiten Energiewandler 21 gelangen somit nahezu keine Störsignale in das Versorgungsnetz 2.

Das Wiederaufladen der Batterie 10 erfolgt dabei ausschließlich über den ersten Energiewandler 20, so dass nur dieser Energiewandler 20 für entsprechend große Ladeströme ausgelegt werden muss. Dabei kann das Aufladen der Batterie 10 entweder über einen dreiphasigen Anschluss erfolgen, wodurch ein besonders rasches Wiederaufladen der Batterie 10 ermöglicht wird. Steht dagegen nur ein einphasiger Netzanschluss zur Verfügung, so kann das Wiederaufladen der Batterie auch nur einphasig erfolgen. In diesem Fall erhöht sich jedoch die Ladezeit der Batterie.

Für die Kompensation der Störsignale müssen durch den zweiten Energiewandler 21 nur relativ geringe Ströme bereitgestellt werden. Daher kann dieser Energiewandler auch entsprechend kleiner dimensioniert werden. Da es sich darüber hinaus bei den Störsignalen ausschließlich um höherfrequente Signale handelt, kann in der zweiten Netzanschlussvorrichtung 31 auch eine Entkopplung der Gleichstromanteile erfolgen. Beispielsweise kann in der zweiten Netzanschlussvorrichtung 31 eine geeignete Filtervorrichtung integriert werden. Im einfachsten Fall kann es sich bei dieser Filtervorrichtung um einen Kondensator 321, 322, 323 handeln. Die Dimensionierung dieser Kondensatoren kann dabei an das zu erwartende Frequenzspektrum angepasst werden. In komplexeren Anwendungsfällen kann als Filtervorrichtung auch ein geeignetes Filter, beispielsweise ein Hochpassfilter integriert werden.

Die zu kompensierenden Beeinträchtigungen, die während des Ladevorgangs entstehen, können dabei theoretisch berechnet und/oder messtechnisch ermittelt werden. Einerseits ist es möglich, die während des Ladevorgangs auftretenden Beeinträchtigungen basierend auf den bekannten Systemparametern abzuschätzen und zu berechnen. So hängt beispielsweise die auftretende Beeinträchtigung sehr stark von der Steuerfrequenz des ersten Energiewandlers 20 während des Ladevorgangs ab. Daher kann für die aktive Kompensation durch den zweiten Energiewandler 21 während des Ladevorgangs die bekannte Steuerfrequenz des ersten Energiewandlers 20 berücksichtigt werden und basierend darauf ein geeignetes Kompensationssignal erzeugt werden. Beispielsweise kann hierzu eine Schätzvorrichtung 50 Informationen über die für das Aufladen der Batterie 10 verwendeten Frequenzen erhalten und basierend darauf die erforderlichen Frequenzkomponenten berechnen, die für eine aktive Kompensation erforderlich sind.

Alternativ oder auch ergänzend kann darüber hinaus durch eine Messvorrichtung 51 der Spannungsverlauf am Anschluss des Energienetzes überwacht werden. Dabei können auftretende Störsignale detektiert werden und basierend auf diesen detektierten Störsignalen die aktive Kompensation durch den zweiten Energiewandler 21 angepasst werden. Somit können insbesondere auch Variationen, die aufgrund unterschiedlicher Eigenschaften des Versorgungsnetzes 2 herrühren, zuverlässig und effizient kompensiert werden. Insbesondere wenn die Messung und die aktive Kompensation in Echtzeit erfolgt, werden die Beeinträchtigungen des Versorgungsnetzes 2 durch die erfindungsgemäße Ladevorrichtung auf ein Minimum begrenzt. Somit können die Anforderungen des Netzbetreibers an die Störungsunterdrückung auf das Versorgungsnetz 2 eingehalten werden.

Die erfindungsgemäße Ladevorrichtung wurde im Vorausgegangenen unter Bezug auf ein Elektrofahrzeug beschrieben. Grundsätzlich ist eine solche Ladevorrichtung jedoch nicht auf Elektrofahrzeuge beschränkt. Vielmehr ist es darüber hinaus ebenso möglich, alle Arten von elektrischen Energiespeichern, insbesondere alle Arten von wiederaufladbaren Batterien durch ein Energieversorgungsnetz aufzuladen und dabei während des Ladevorgangs auftretende Beeinträchtigungen zu kompensieren. Insbesondere bei Betriebsanordnungen, bei denen mehrere Verbraucher über separate Energiewandler, wie beispielsweise Umformer, angeschlossen sind, lässt sich auf erfindungsgemäße Weise ein Umformer für das Aufladen des Energiespeichers verwenden und ein weiterer Umformer für eine aktive Kompensation von auftretenden Störsignalen.

Figur 4 zeigt eine schematische Darstellung eines Ablaufdiagramms für ein Verfahren zum Betreiben einer Ladevorrichtung, wie sie einer Ausführungsform der vorliegenden Erfindung zugrunde liegt. In einem ersten Schritt 110 wird ein Energiespeicher, beispielsweise eine wiederaufladbare Batterie bereitgestellt. In einem weiteren Schritt 120 wird ein erster Energiewandler bereitgestellt, der mit dem Energiespeicher verbunden ist. Weiterhin wird in einem Schritt 130 ein zweiter Energiewandler bereitgestellt, der ebenfalls mit einem Energiespeicher verbunden ist. Der erste und der zweite Energiewandler können dabei während eines Arbeitsbetriebes jeweils mit separaten Verbrauchern verbunden werden. Durch entsprechende Ansteuerung der Energiewandler können in diesem Arbeitsbetrieb die Verbraucher kontrolliert betrieben werden.

Zum Wiederaufladen des Energiespeichers wird daraufhin in einem Schritt 140 der erste Energiewandler mit dem Energienetz verbunden und somit durch das Energienetz dem Energiewandler elektrische Energie bereitgestellt. Weiterhin wird in einem Schritt 150 auch der zweite Energiewandler mit dem Energienetz verbunden. Daraufhin wird in Schritt 160 der Energiespeicher durch die am ersten Energiewandler bereitgestellte Energie geladen. In Schritt 170 werden weiterhin die während des Ladevorgangs entstehenden Beeinträchtigungen des Energienetzes durch den zweiten Energiewandler kompensiert. Der zweite Energiewandler wird hierzu aktiv angesteuert, um so Spannungssignale zu erzeugen, die den durch den ersten Energiewandler entstehenden Beeinträchtigungen entgegenwirken und im besten Falle diese Beeinträchtigungen auslöschen.

Für eine möglichst präzise und effiziente aktive Kompensation der auftretenden Beeinträchtigungen kann das erfindungsgemäße Verfahren ferner einen Schritt umfassen, der die Beeinträchtigungen ermittelt und daraufhin die aktive Kompensation basierend auf diesen ermittelten Beeinträchtigungen steuert. Beispielsweise kann hierzu der Spannungsverlauf am Anschluss des Energienetzes überwacht werden und die aktive Kompensation basierend auf den so ermittelten Messwerten gesteuert werden. Vorzugsweise kann die Spannungsüberwachung und die Analyse der auftretenden Störungen in Echtzeit erfolgen.

Ferner ist es auch möglich, die auftretenden Beeinträchtigungen während des Ladevorgangs rechnerisch zu ermitteln. Hierzu können beispielsweise die zu erwartenden Störsignale abgeschätzt werden. Basierend auf der Kenntnis von Taktrate, Steuerfrequenz und weiteren Parametern, die dem Ladevorgang des Energiespeichers 10 zugrunde liegen, kann das System modelliert werden. Nach dem Aufstellen eines geeigneten mathematischen Modelles werden die zu erwartenden Störsignale berechnet und die Kompensation am Netzanschluss so gesteuert, dass die zu erwartenden Beeinträchtigungen minimiert werden.

Zusammenfassend betrifft die vorliegende Erfindung das Aufladen einer Batterie mit gleichzeitiger aktiver Kompensation der während des Aufladens auftretenden Störsignale. Für das Aufladen der Batterie werden hierbei mindestens zwei Umformer verwendet, die während eines Arbeitsbetriebs angeschlossene Verbraucher steuern können. Im Ladebetrieb steuert ein Umformer den Aufladevorgang, während der weitere Umformer eine aktive Kompensation der auftretenden Störsignale durchführt.

## Patentansprüche

1. Ladevorrichtung für einen Energiespeicher (10) mit
- einem ersten Energiewandler (20), der mit dem Energiespeicher (10) verbunden ist und der dazu ausgelegt ist, einen ersten Verbraucher (40) anzusteuern;
- einem zweiten Energiewandler (21), der mit dem Energiespeicher (10) verbunden ist und der dazu ausgelegt ist, einen zweiten Verbraucher (41) anzusteuern;
- eine erste Netzanschlussvorrichtung (30), die dazu ausgelegt ist, ein Energienetz (2) mit dem ersten Energiewandler (20) zu verbinden;
- eine zweite Netzanschlussvorrichtung (31), die dazu ausgelegt ist, das Energienetz (2) mit dem zweiten Energiewandler (21) zu verbinden;
- wobei der erste Energiewandler (20) dazu ausgelegt ist, den Energiespeicher (10) mit von dem Energienetz (2) bereitgestellter Energie zu laden; und
- wobei der zweite Energiewandler (21) dazu ausgelegt ist, während des Ladens des Energiespeichers (10) eine vom ersten Energiewandler (20) erzeugte Beeinträchtigung in das Energienetz (2) zu kompensieren;
- wobei die erste Netzanschlussvorrichtung (30) während des Ladens des Energiespeichers (10) eine Verbindung zwischen dem ersten Energiewandler (20) und dem Energienetz (2) bereitstellt und eine Verbindung zwischen dem ersten Energiewandler (20) und dem ersten Verbraucher (40) unterbricht; und
- wobei die zweite Netzanschlussvorrichtung (31) während des Ladens des Energiespeichers (10) eine Verbindung zwischen dem zweiten Energiewandler (21) und dem Energienetz (2) bereitstellt und eine Verbindung zwischen dem zweiten Energiewandler (21) und dem zweiten Verbraucher (41) unterbricht,
**dadurch gekennzeichnet, dass**
der zweite Energiewandler (21) ferner dazu ausgelegt ist, basierend auf einer vorbestimmten Steuerfrequenz des ersten Energiewandlers (20) ein Kompensationssignal für die Kompensation der vom ersten Energiewandler (20) erzeugten Beeinträchtigung zu erzeugen.

2. Ladevorrichtung nach Anspruch 1, ferner umfassend eine Messvorrichtung (51), die dazu ausgelegt ist, eine Spannung in dem Energienetz (2) während des Ladens zu überwachen, wobei der zweite Energiewandler (21) die Beeinträchtigung in dem Energienetz (2) basierend auf der überwachten Spannung kompensiert.

3. Ladevorrichtung nach einem der vorherigen Ansprüche, ferner umfassend eine Schätzvorrichtung (50), die dazu ausgelegt ist, eine Beeinträchtigung des Energienetzes (2) während des Ladens zu berechnen; wobei der zweite Energiewandler (21) die Beeinträchtigung in dem Energienetz (2) basierend auf der berechneten Beeinträchtigung kompensiert.

4. Ladevorrichtung nach Anspruch 3, wobei die Schätzvorrichtung (50) die Beeinträchtigung basierend auf der vorbestimmten Steuerfrequenz berechnet, mit der der erste Energiewandler (20) betrieben wird.

5. Ladevorrichtung nach einem der vorherigen Ansprüche, wobei die zweite Netzanschlussvorrichtung (21) eine Filtereinheit (321, 322, 323) umfasst.

6. Ladevorrichtung nach Anspruch 5, wobei die Filtereinheit (321, 322, 323) ein Hochpassfilter umfasst.

7. Ladevorrichtung nach einen der vorherigen Ansprüche, wobei der erste Verbraucher (40) ein erster elektrischer Antrieb ist und der zweite elektrische Verbraucher (41) ein zweiter elektrischer Antrieb ist.

8. Elektrofahrzeug (1) mit einer Ladevorrichtung nach einem der vorherigen Ansprüche.

9. Verfahren (100) zum Betrieb einer Ladevorrichtung mit den Schritten
Bereitstellen (110) eines Energiespeichers (10);
Bereitstellen (120) eines ersten Energiewandlers (20), der mit dem Energiespeicher (10) verbunden ist;
Bereitstellen (130) eines zweiten Energiewandlers (21), der mit dem Energiespeicher (10) verbunden ist;
Verbinden (140) des ersten Energiewandlers (20) mit einem Energienetzes (2), das elektrische Energie bereitstellt;
Verbinden (150) des zweiten Energiewandlers (21) mit dem Energienetz (2);
Laden (160) des Energiespeichers (10) durch am ersten Energiewandler (20) bereitgestellte elektrische Energie; und
Kompensieren (170) einer während des Ladens des Energiespeichers (10) auftretenden Beeinträchtigung des Energienetzes (2) durch den zweiten Energiewandler (21),
**gekennzeichnet durch** den Schritt
Ermitteln der auftretenden Beeinträchtigung des Energienetzes (2) basierend auf einer vorbestimmten Steuerfrequenz des ersten Energiewandlers (20),
wobei der Schritt (170) zum Kompensieren der Beeinträchtigung des Energienetzes (2) die Beeinträchtigung basierend auf der ermittelten Beeinträchtigung kompensiert.

10. Verfahren nach Anspruch 9, wobei der Schritt zum Ermitteln der auftretenden Beeinträchtigung eine Spannung in dem Energienetz (2) überwacht und die Beeinträchtigung basierend auf der überwachten Spannung ermittelt.

## Claims

1. Charging device for an energy store (10) having
- a first energy converter (20) which is connected to the energy store (10) and which is designed to drive a first load (40) ;
- a second energy converter (21) which is connected to the energy store (10) and which is designed to drive a second load (41) ;
- a first supply system connection device (30) which is designed to connect an energy supply system (2) to the first energy converter (20);
- a second supply system connection device (31) which is designed to connect the energy supply system (2) to the second energy converter (21);
- wherein the first energy converter (20) is designed to charge the energy store (10) with energy which is provided by the energy supply system (2); and
- wherein the second energy converter (21) is designed to compensate for an adverse effect, which is generated by the first energy converter (20), in the energy supply system (2) during charging of the energy store (10);
- wherein the first supply system connection device (30) provides a connection between the first energy converter (20) and the energy supply system (2) interrupts a connection between the first energy converter (20) and the first load (40) during charging of the energy store (10); and
- wherein the second supply system connection device (31) provides a connection between the second energy converter (21) and the energy supply system (2) interrupts a connection between the second energy converter (21) and the second load (41) during charging of the energy store (10),
**characterized in that**
the second energy converter (21) is further designed to generate a compensation signal for compensating for the adverse effect which is generated by the first energy converter (20), based on a predetermined control frequency of the first energy converter (20).

2. Charging device according Claim 1, further comprising a measuring device (51) which is designed to monitor a voltage in the energy supply system (2) during charging, wherein the second energy converter (21) compensates for the adverse effect in the energy supply system (2) based on the monitored voltage.

3. Charging device according to one of the preceding claims, further comprising an estimation device (50) which is designed to calculate an adverse effect in the energy supply system (2) during charging; wherein the second energy converter (21) compensates for the adverse effect in the energy supply system (2) based on the calculated adverse effect.

4. Charging device according to Claim 3, wherein the estimation device (50) calculates the adverse effect based on the predetermined control frequency with which the first energy converter (20) is operated.

5. Charging device according to one of the preceding claims, wherein the second supply system connection device (21) comprises a filter unit (321, 322, 323).

6. Charging device according to Claim 5, wherein the filter unit (321, 322, 323) comprises a high-pass filter.

7. Charging device according to one of the preceding claims, wherein the first load (40) is a first electric drive, and the second electrical load (41) is a second electric drive.

8. Electric vehicle (1) comprising a charging device according to one of the preceding claims.

9. Method (100) for operating a charging device, comprising the steps of
providing (110) an energy store (10);
providing (120) a first energy converter (20) which is connected to the energy store (10);
providing (130) a second energy converter (21) which is connected to the energy store (10);
connecting (140) the first energy converter (20) to an energy supply system (2) which provides electrical energy;
connecting (150) the second energy converter (21) to the energy supply system (2);
charging (160) the energy store (10) using electrical energy which is provided at the first energy converter (20); and
compensating (170) for an adverse effect on the energy supply system (2), which occurs during charging of the energy store (10), using the second energy converter (21),
**characterized by** the step of
ascertaining the adverse effect in the energy supply system (2) which occurs, based on a predetermined control frequency of the first energy converter (20),
wherein the step (170) for compensating for the adverse effect in the energy supply system (2) compensates for the adverse effect based on the ascertained adverse effect.

10. Method according to Claim 9, wherein the step for ascertaining the adverse effect which occurs monitors a voltage in the energy supply system (2) and ascertains the adverse effect based on the monitored voltage.

## Revendications

1. Dispositif de charge d'un accumulateur (10) d'énergie comprenant
- un premier convertisseur (20) d'énergie, qui est relié à l'accumulateur (10) d'énergie et qui est conçu pour exciter un premier consommateur (40) ;
- un deuxième convertisseur (21) d'énergie, qui est relié à l'accumulateur (10) d'énergie et qui est conçu pour exciter un deuxième consommateur (41) ;
- un premier dispositif (30) de raccordement à un réseau, qui est conçu pour relier un réseau (2) d'énergie au premier convertisseur (20) d'énergie;
- un deuxième dispositif (31) de raccordement à un réseau, qui est conçu pour relier le réseau (2) d'énergie au deuxième convertisseur (21) d'énergie;
- dans lequel le premier convertisseur (20) d'énergie est conçu pour charger l'accumulateur (10) d'énergie par de l'énergie mise à disposition par le réseau (2) d'énergie et
- dans lequel le deuxième convertisseur (21) d'énergie est conçu pour, pendant la charge de l'accumulateur d'énergie, compenser une atteinte au réseau (2) d'énergie portée par le premier convertisseur (20) d'énergie;
- dans lequel le premier dispositif (30) de raccord à un réseau assure, pendant la charge de l'accumulateur (10) d'énergie, une liaison entre le premier convertisseur (20) d'énergie et le réseau (2) d'énergie et interrompt une liaison entre le premier convertisseur (20) d'énergie et le premier consommateur (40) et
- dans lequel le deuxième dispositif (31) de raccord à un réseau assure, pendant la charge de l'accumulateur (10) d'énergie, une liaison entre le deuxième convertisseur (21) d'énergie et le réseau (2) d'énergie et interrompt une liaison entre le deuxième convertisseur (21) d'énergie et le deuxième consommateur (41),
**caractérisé en ce que**
le deuxième convertisseur (21) d'énergie est conçu, en outre, pour, sur la base d'une fréquence d'excitation déterminée à l'avance du premier convertisseur (20) d'énergie, produire un signal de compensation pour compenser l'atteinte portée par le premier convertisseur (20) d'énergie.

2. Dispositif de charge suivant la revendication 1, comprenant, en outre, un dispositif (51) de mesure, qui est conçu pour contrôler une tension dans le réseau (2) d'énergie pendant la charge, le deuxième convertisseur (21) d'énergie compensant, sur la base de la tension contrôlée, l'atteinte portée au réseau (2) d'énergie.

3. Dispositif de charge suivant l'une des revendications précédentes, comprenant, en outre, un dispositif (50) d'évaluation, qui est conçu pour calculer une atteinte portée au réseau (2) d'énergie pendant la charge, le deuxième convertisseur (21) d'énergie compensant, sur la base de l'atteinte calculée, l'atteinte portée au réseau (2) d'énergie.

4. Dispositif de charge suivant la revendication 3, dans lequel le dispositif (50) d'évaluation calcule l'atteinte sur la base de la fréquence d'excitation déterminée à l'avance à laquelle fonctionne le premier convertisseur (20) d'énergie.

5. Dispositif de charge suivant l'une des revendications précédentes, dans lequel le deuxième dispositif (21) de raccord à un réseau comprend une unité (321, 322, 323 ) de filtrage.

6. Dispositif de charge suivant la revendication 5, dans lequel l'unité ( 321, 322, 323 ) de filtrage comprend un filtre passe-haut.

7. Dispositif suivant l'une des revendications précédentes, dans lequel le premier consommateur (40) est un premier entraînement électrique et le deuxième consommateur (41) électrique est un deuxième entraînement électrique.

8. Véhicule (1) électrique ayant un dispositif de charge suivant l'une des revendications précédentes.

9. Procédé (100) pour faire fonctionner un dispositif de charge, comprenant les stades
on se procure (110) un accumulateur (10) d'énergie;
on se procure ( 120 ) un premier convertisseur (20) d'énergie, qui est relié à l'accumulateur (10) d'énergie;
on se procure ( 130 ) un deuxième convertisseur (21) d'énergie, qui est relié à l'accumulateur (10) d'énergie;
on relie (140) le premier convertisseur (20) d'énergie à un réseau (2) d'énergie, qui procure de l'énergie électrique;
on relie (150) le deuxième convertisseur (21) d'énergie au réseau (2) d'énergie;
on charge ( 160 ) l'accumulateur (10) d'énergie par de l'énergie électrique procurée dans le convertisseur (20) d'énergie et
on compense ( 170 ) , par le deuxième convertisseur (21) d'énergie, une atteinte portée au réseau (2) d'énergie se produisant pendant la charge de l'accumulateur (10) d'énergie;,
**caractérisé par** le stade
on détermine l'atteinte portée au réseau (2) d'énergie, qui se produit sur la base d'une fréquence d'excitation déterminée à l'avance du premier convertisseur (20) d'énergie,
le stade ( 170 ) de compensation de l'atteinte portée au réseau (2) d'énergie compensant l'atteinte sur la base de l'atteinte déterminée.

10. Procédé suivant la revendication (9), dans lequel le stade de détermination de l'atteinte, qui se produit, contrôle une tension dans le réseau (2) d'énergie et détermine l'atteinte sur la base de la tension contrôlée.
